# EUROPEAN PATENT SPECIFICATION

(11) **EP 1 612 517 B1**
(45) Date of publication and mention of the grant of the patent: **30.07.2008**
(21) Application number: 05014200.9
(22) Date of filing: 30.06.2005
(51) Int. Cl.: G01C 21/34, G08G 1/0968

(54) **Navigation system and traffic prediction method**
Navigationssystem und Verkersprognoseverfahren
Système de navigation et procédé de prévision de la circulation routière

(30) Priority: 02.07.2004 JP 2004196494
(43) Date of publication of application: 04.01.2006
(73) Proprietor: AISIN AW CO., LTD., Anjo, Aichi 444-1192 (JP)
(72) Inventor: Yoshikawa, Kazutaka, Okazaki Aichi 444-8564 (JP); Tomita, Hiroshi, Okazaki Aichi 444-8564 (JP); Minami, Toshiaki, Okazaki Aichi 444-8564 (JP); Nagase, Kenji, Okazaki Aichi 444-8564 (JP)
(74) Representative: TBK-Patent

(56) References cited:
- US-A- 5 220 507
- US-A1- 2002 082 767
- US-A1- 2002 128 766
- US-B1- 6 480 783

## Description

Related technical fields include navigation systems.

Document US-B1-6 480 783 discloses a navigation apparatus in which real time vehicle guidance is provided. This apparatus adopts a so-called forecasting system, which allows the driver to enter alternative times schedules for the same destination and to receive alternative travel time estimate for the same destination depending on the estimated traffic volumes on the road at that particular time.

Conventional navigation apparatus may be used on vehicles, such as, for example, cars. According to such navigation apparatus, a driver of the vehicle may set a destination by operating an input unit. A current position detector may detect a current position of the vehicle. Thus, the destination and the current position of the vehicle may be set. A route from the current position to the destination may then be searched for. Route navigation/guidance may be performed along the route detected in the searching process. In the route searching process, a route that is the shortest in distance from the current position to the destination or a route that is the shortest in time needed to reach the destination is selected.

Conventional navigation apparatus, such as, for example, described in Japanese Unexamined Patent Application Publication No. 2004-85486, may receive traffic information, such as, road congestion information, so that a suitable route may be searched to avoid a congested area. In this case, an area including the route is logically divided by operation of a Grid Square System into sections. A server searches for a plurality of routes and distributes traffic information to the navigation apparatus regarding each section. Thus, the conventional apparatus searches for a route that is shortest in necessary time after receiving the traffic information.

According to the above conventional navigation apparatus, only current traffic information is received. Thus, if a route is searched using the current traffic information, when a vehicle passes through a point on the route that is distant from an earlier position where the navigation apparatus received the traffic information, the previously received traffic information may not indicate an actual traffic condition at the point. This is because the traffic condition at the point may have changed while traveling from the earlier position to the point. Accordingly, even if a route is conventionally searched using the traffic information, the searched route may not always be a quickest route, that is a route that requires the shorted travel time.

Accordingly, it is beneficial to provide a navigation system capable of receiving predicted traffic information corresponding to a predicted time at which a vehicle will pass a particular point on a route. It is beneficial to provide an onboard device searches for a suitable route using predicted traffic information to avoid traffic congestion.

This object is solved by a navigation system as set out in claim 1, and alternatively by a traffic information prediction method as set out in claim 6, and further alternatively by a storage medium as set out in claim 8.

Advantageous developments are set out in the dependent claims.

Exemplary implementations will now be described with reference to the accompanying drawings, wherein:
Fig. 1 shows a method of calculating a predicted passing time according to an exemplary implementation of the principles described herein;
Fig. 2 shows a navigation system according to an exemplary implementation of the principles described herein;
Fig. 3 shows a first method of creating a short-term predicted link travel time pattern according to an exemplary implementation of the principles described herein;
Fig. 4 shows a second method of creating a short-term predicted link travel time pattern according to an exemplary implementation of the principles described herein;
Fig. 5 shows a method of creating a long-term predicted link travel time pattern according to an exemplary implementation of the principles described herein; and
Fig. 6 shows an information distribution method according to an exemplary implementation of the principles described herein.

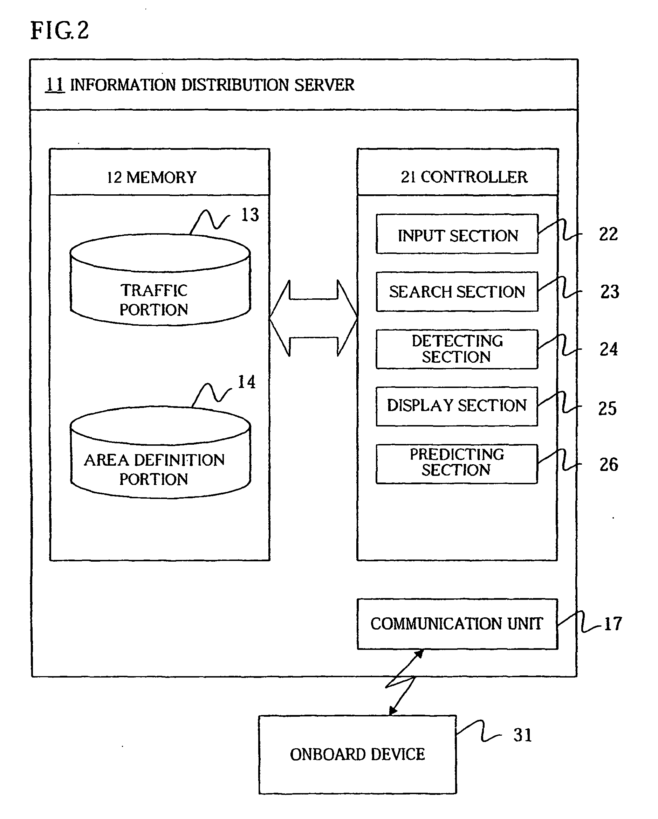

Fig. 2 shows a structure of an exemplary navigation system. The navigation system may include, for example, an information distribution server 11, which may be included in a computer. The navigation system 11 may include a controller 21 such as, for example, a CPU and/or an MPU. The navigation system 11 may include a memory, such as, for example, a semiconductor memory, a magnetic disk, and/or an optical disk. The navigation system 11 may include a communication unit 17.

The navigation system 11 may also include, for example, one or more onboard devices 31 for use on a vehicle such as, for example, a passenger car, a truck, a bus, or a motorcycle. The onboard device may be operated by a user, such as a driver, passenger of the vehicle, and/or any person. It should be appreciated that, many types of onboard devices are known, and many more will be or are being developed. Accordingly, the exemplary onboard device 31 is intended to represent any now-known or later-developed navigation apparatus or any now-known or later-developed on-board device capable of searching for a route from a starting point to a destination.

The onboard device 31 may include a controller such as, for example, a CPU and MPU. The onboard device 31 may include a storage medium, such as, for example, a semiconductor memory and/or magnetic disk. The onboard device 31 may include a display device, such as, for example, a liquid crystal display, a LED (Light Emitting Diode) display, and/or a CRT (Cathode Ray Tube) display. The onboard device 31 may include an input device, such as, for example, a keyboard, a joystick, a cross-shape key, a push button, a remote control apparatus, and/or a touch panel. The onboard device 31 may include a display control device, for example, for controlling the display device. The onboard device 31 may include a communication device, for example, capable of transmitting and receiving information.

The onboard device 31 may further include, for example, a current position detector (not shown). The current position detector may detect a current location by, for example, a GPS (Global Positioning System), a geomagnetic field sensor, a distance sensor, a steering sensor, a beacon sensor, or a gyroscopic sensor.

The onboard device 31 may include a controller that, for example, stores map data including search data, searches for facilities and points, and/or searches for a route to a set destination. The onboard device may receive and/or store traffic information. Thus, it is possible for the onboard device 31 to execute DRG (Dynamic Route Guidance) by using the traffic information to search for a route that avoids traffic restriction and congestion.

Note that the onboard device 31 may be in communication with the information distribution server 11, for example, via a network (not shown).

As discussed above, the exemplary navigation system may include, for example, the information distribution server 11 and the onboard device 31. According to this arrangement, the user may be registered in the navigation system in advance, for example, by using a registration ID. Further, the onboard device 31 may be registered in advance as well.

The information distribution server 11 may include a memory 12, for example, for storing data necessary for creating predicted congestion information. Accordingly, the memory 12 may be physically, functionally, and/or conceptually divided into at least a traffic information portion 13 and an area definition portion 14. The information distribution server 11 may include a controller 21, for example, for accessing to the memory 12 and creating predicted congestion information based on the stored data.

The traffic information portion 13 may store road traffic information such as, for example, congestion information and/or restriction information. Such road traffic information may be created in a VICS (Vehicle Information & Communication System®) by collecting information from traffic control systems, such as, for example, a police department and/or the Japan Highway Public Corporation. Past information about road congestion may also be included in the traffic information portion 13 in the form of, for example, statistical congestion information. The traffic information portion 13 may store, for example, event information, including event related statistical congestion information and event related predicted congestion information under various conditions based on the event information. For example, information about a place hosting an event, such as, for example, a festival, a parade, and/or a fireworks show, and information about the date and/or time when the event is to be held, may be stored in the traffic information portion 13. Similarly, information that the traffic gets heavy on roads around a station or big commercial facilities during a specific weekday time period, and/or information that the traffic gets heavy on roads around a beach during a summer vacation, may be stored in the traffic information portion 13. The statistical congestion information or the predicted congestion information may correspond to a VICS® link, as described later.

The traffic information portion 13 may also store, for example, information given by a plurality of registered users. As a result, the registered users may, for example, provide detailed traffic information such as, road congestion information, information concerning traffic control, and/or restriction information. The traffic information portion 13 may further store, for example, link travel time patterns accumulated in the past.

As used herein, the term "link" refers to, for example, a road or portion of a road. For example, according to one type of road data, each road may consist of a plurality of componential units called links. Each link may be separated and defined by, for example, an intersection, an intersection having more than three roads, a curve, and/or a point at which the road type changes. As used herein, the term "link travel time" refers to an amount of time necessary to travel the length of a link.

The area definition portion 14 may store, for example, a data structure, such as a table, for defining predetermined areas. A predetermined area is a region that results from dividing a map into sections of a predetermined size, and may include any area. For example, predetermined areas may be determined by, for example, dividing a map into one or more predetermined areas based on the second grid of the Grid Square System. The Grid Square System is described in detail in "JIS X 0410-1976 Grid Square System," which is incorporated herein by reference in its entirety.

VICS® traffic information may be provided for each second grid section and a unique VICS® link ID may be given for each of an outbound and inbound lane of a road within the second grid section.

Each of the one or more predetermined areas may be registered as a specified area 55 for the purpose of searching for a route, and may be set case-by-case. For example, an area including an urban expressway such as a metropolitan expressway may be divided and set as the specified area as described above. The division may depend on, for example, the complexity of the urban expressway. Furthermore, for example, an urban area, such as a city center, may be divided into a crowded area such as a section around a station, where traffic congestion occurs frequently, and a non-crowded area and the crowded area and/or non-crowded area may be set as the specified area.

The area definition portion 14 may store link information within the specified area. For example, each link may have a road link ID as an identification number. The link information may include VICS® link IDs as well. It should be appreciated that the VICS® link may not be identical to the road link. Thus, the area definition portion 14 may include a conversion table including the road link ID and the VICS® link ID for each link.

The memory 12 may store map data including, for example, search data necessary for route search. For example, map data for all of Japan may be stored in the memory 12. The map data may include, for example, link data, intersection data and/or node data. Furthermore, the memory 12 may store POI (Point of Interest) data including, for example, facility data, Yellow Page data, and/or event data usable, for example, to detect a starting point, a destination, and/or a waypoint.

As used herein, the term "node" refers to, for example, a point where at least two links meet. Each node may be defined by, for example, an intersection, an intersection having more than three roads, a curve, and/or a point at which the road type changes.

The memory 12 may include, for example, an internal storage medium or external storage medium.

The controller 21 may be physically, functionally, and or conceptually divided into at least one or more of an input section 22, a search section 23, a detecting section 24, a display section 25, and a prediction section 26. The input section 22 may control the input and distribution of, for example, DRG data received from the onboard device 31, facility data, and/or point data. The search section 23 may search for facilities and points based on, for example, search conditions included in a search request received from the onboard device 31. The detecting section 24 may search for one or more routes to a set destination and may calculate a passing time at which each link on each route will be passed through. The display section 25 may control a display of, for example, predicted congestion information.

As discussed above, the predetermined area for which traffic congestion may be predicted may be any area in which traffic information is desired. However, in the exemplary methods described below, for convenience of explanation, the predetermined area is a specified area 55 registered in advance.

The specified area 55 may be stored in the in the area definition portion 14. When a route comes across the specified area 55, the predicting section 26 may create predicted traffic information for links within the specified area 55. The specified area 55 may be, for example, an area where a user has broad options to select a route to avoid traffic congestion because a network of roads therein is complex. However, the specified area 55 may also be, for example, a second grid section including an urban expressway such as a metropolitan expressway, a section of an area which is divided into the a predetermined size, and/or an area around a predefined point, such as a train station, may be selected as the specified area 55.

The information distribution server 11 may search for routes through the specified area 55, generate predicted traffic information for the searched routes, and distribute the information to the onboard device 31.

The information distribution server 11 may include a communication unit 17, for example, for communicating with the onboard device 31. When the communication unit 17 receives, for example, a request for route search and/or a request for predicted congestion information, the communication unit 17 may identify the onboard device 31 that transferred the distribution request. Then, the communication unit 17 may send the requested data to the identified onboard device 31.

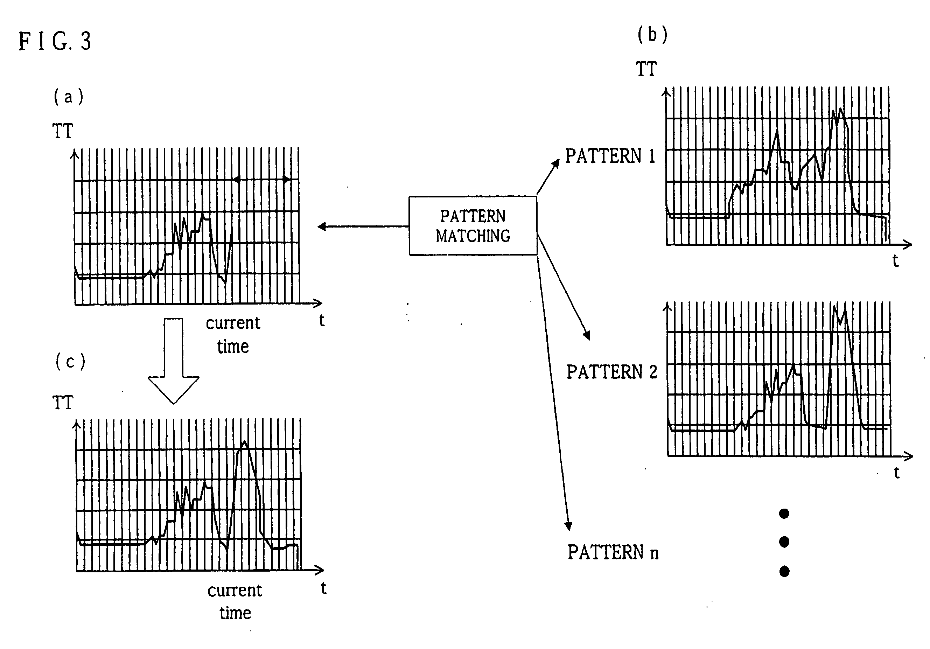

Exemplary methods of creating a predicted link travel time pattern will be described, with reference to Figs. 3-5. The exemplary methods may be executed, for example, by the prediction section 26 of the navigation system described above. However, it should be appreciated that the exemplary methods need not be limited by the above-described structure.

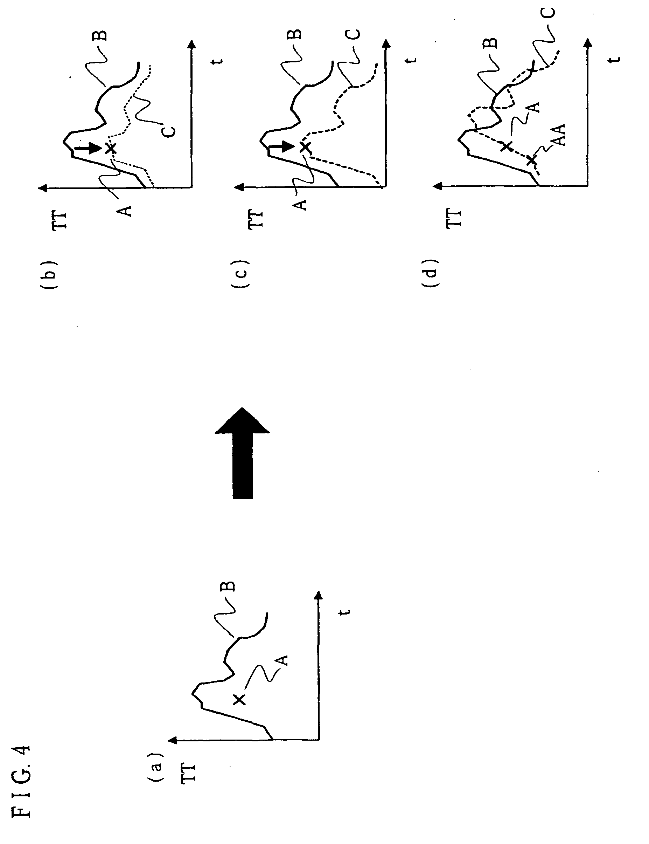

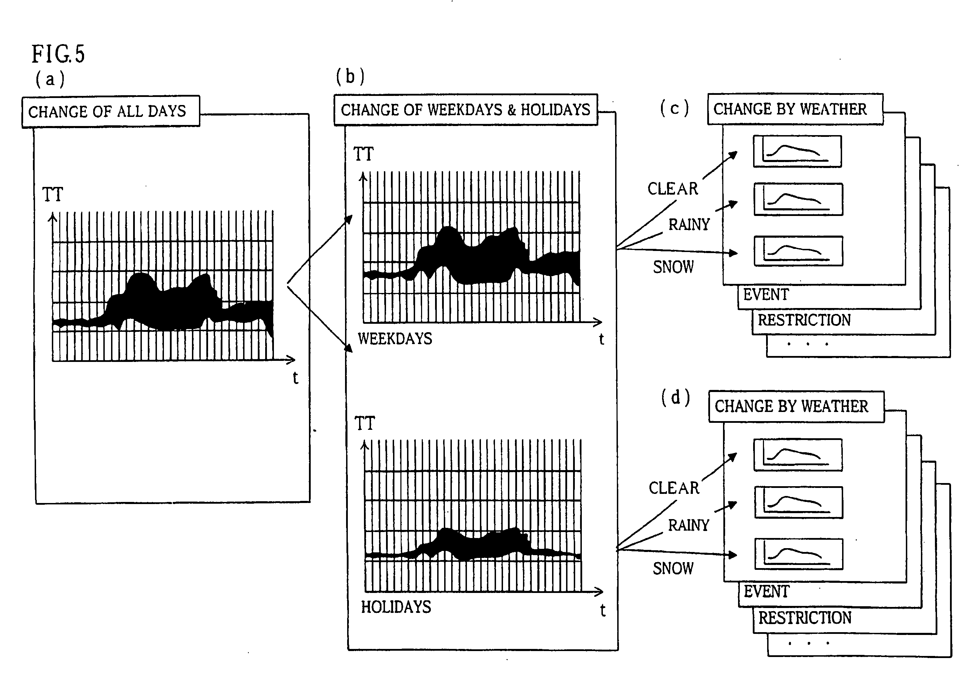

Figs. 3 shows a first exemplary method of creating a short-term predicted link travel time pattern. Fig. 4 shows a second exemplary method of creating a short-term predicted link travel time pattern. Fig. 5 shows an exemplary method of creating a long-term predicted link travel time pattern.

The exemplary methods of creating short-term predicted link travel time patterns shown in Figs. 3 and 4 may utilize current feedback. Specifically, based on a current vehicle travel condition, for example, received from the onboard device 31, a predicted link travel time pattern is created. For example, according to the exemplary method of Fig. 3, a pattern matching method may be used. According to the exemplary method of Fig. 4, a waveform compensation method may be used. When creating a short-term predicted link travel time pattern, the term may be set, for example, as approximately two hours from a current time. However, the term may be set as any length of time.

As shown in Fig. 3(a), first, a prior link travel time pattern for a vehicle may be created in a predetermined term before a current time. The prior link travel time pattern may be based on data received, for example, from the onboard device 31 indicating one or more previous conditions of the vehicle usable to determine link travel time. The predetermined term in the past may be, for example, a term from midnight on the same day to the current time. However, the predetermined term may be set as any length of time. In Fig. 3 (a), the horizontal axis indicates time of day and the vertical axis indicates total travel time (indicated by TT).

Next, in Fig. 3(b), the created prior link travel time pattern and stored past link travel time patterns are compared. For example, the predict section 26 may access the traffic information portion 13, and compare the created prior link travel time pattern with stored link travel time patterns. Then, one or more of the stored link travel time patterns which most closely approximate the created prior link travel time over the same time period are used to predict the likely travel time for the remainder of the vehicle's route. Thus, the predicted link travel time pattern including the link travel time pattern in Fig. 3(a) may be obtained as shown in Fig. 3 (c).

For example, the predict section 26 may predict link travel time patterns for the remainder of the vehicle's route based on the past link travel time patterns stored in the traffic information portion 13. That is, the predict section 26 may select the stored link travel time patterns that most closely match of the created prior link travel time pattern in terms of the range from the origin point to the current time based on the horizontal axis and predict the remaining link travel times for the vehicle based on those selected stored link travel time patterns. The predict section 26 may predict the remaining link travel times by, for example, statistically or otherwise combining the selected stored link travel time patterns. Then the predict section 26 may select a part of the predicted link travel time pattern that is after the current time and sets it as a predicted link travel time pattern for the predicted term.

Next, a second exemplary method of creating a short-term predicted link travel time pattern by using the waveform compensation method will be described, with reference to Fig. 4. According to this exemplary method, an average link travel time pattern is used, which is stored among the past link travel time patterns stored in the traffic information portion 13. In Fig. 4 (a), a point A in indicates a current vehicle condition received from the onboard device 31. Line B in Fig. 4 (a) indicates an average link travel time pattern derived from past link travel time patterns. In Fig. 4(a), the horizontal axis indicates time of day and the vertical axis indicates total travel time.

According to the exemplary method, as shown in Fig. 4 (b), line B may be adjusted to pass through the point A, thereby creating a new predicted link travel time pattern C. Thus, the average link travel time pattern B in the past may be changed in equal ratio creating a new predicted link travel time pattern C. Specifically, for example, a total travel time at a time corresponding to the point A on the line B may be replaced to a total travel time indicating the point A. Then, by using the ratio of the pre-changed total travel time at the time corresponding to the point A and the post-changed total travel time at the same time, all total travel times at all times on line B may be replaced. Thus, line C, indicating a new predicted link travel time pattern, is obtained as shown in Fig. 4 (b).

Alternatively, as shown in Fig. 4 (c), a new predicted link travel time pattern C may be created, for example, by moving the average link travel time pattern B in a vertical direction, in parallel, until line B intersects point A. That is, a total travel time at a time corresponding to the point A on the line B is replaced to a total travel time indicating the point A. Then by using the difference between the pre-changed total travel time at the time corresponding to the point A and the post-changed total travel time at the same time, all total travel times at all times on the line B are replaced. Thus, line C, indicating a new predicted link travel time pattern, is obtained as shown in Fig. 4 (c).

Alternatively, as shown in Fig. 4 (d), a new predicted link travel time pattern C may be created, for example, by moving the average link travel time pattern B to pass through both of the point A and another past point AA. As a result, the line B is transposed to pass through a point AA indicating a previous condition of the vehicle before the current time as well as the point A. Thus, the line C indicating a new predicted link travel time pattern is created as shown in Fig. 4 (d).

Next, an exemplary method of creating a long-term predicted link travel time pattern will be described, with reference to Fig. 4. When creating a long-term predicted link travel time pattern, current feedback may not be used. Rather, a predicted link travel time pattern may be created by statistically analyzing past link travel time patterns, for example, stored in the traffic information portion 13. When creating a long-term predicted link travel time pattern, a predicted term may be set as approximately more than two hours from a current time. However, the predicted term may be set as any length of time.

As shown in Fig. 5(a), first, past link travel time patterns may be obtained. For example, the predict section 26 may access the traffic information portion 13 and may obtain past link travel time patterns stored therein. The link travel time patterns in Fig. 5 (a) indicate the range of total travel times throughout the day, that is, the variation of all past data for each day and regarding all link travel time patterns stored in the traffic information portion 13. In Fig. 5 (a) the horizontal axis indicates time of day and the vertical axis indicates total travel time.

Subsequently, the link travel time patterns may be grouped by type of day. For example, the link travel time patterns may be classified into weekday patterns and holiday patterns. Thus, as shown in Fig. 5(a), the variation on weekdays and the variation on holidays may be separated. As used herein, the term "holiday" refers to Saturdays and Sundays, in addition to public holidays. The term "weekday" refers to days other than holidays. Further, for example, a link travel time patterns for specific days or specific terms such as, for example, Golden Week holidays (Japanese long holiday season), summer vacation, and/or New Year holiday season, may be separated. Abnormal travel time values may be removed from the link travel time pattern so that data variability may be reduced.

Next, the link travel time patterns, that have been grouped according to the calendar, may be further separated according to various criteria such as, for example, weather, events, traffic restrictions. As an example, Fig. 5 (c) and (d) show the travel time patterns separated by weather. Fig. 5 (c) shows weekday link travel time patterns separated into clear days, rainy days, and snowy days. Fig. 5 (d) shows holiday link travel time patterns separated into clear days, rainy days, and snowy days. Thus, it is possible to obtain a predicted link travel time pattern corresponding to a present condition of a vehicle in which the onboard device 31 is installed, for example, a rainy weekday.

A length of each link may be stored as map data. As a result, it is possible to calculate a link travel speed by using the corresponding link travel time and the stored link length. Further, traffic congestion degrees of VICS® information may include degrees of traffic congestion determined by, for example, a travel speed and a road type. For example, in order of decreasing traffic congestion degree, "Congested," "Crowded," and "Not congested," may be used as levels. Thus, congestion information of a link may be obtained based on a link travel time for the link. Similarly, predicted traffic congestion information may be obtained based on the predicted link travel time pattern.

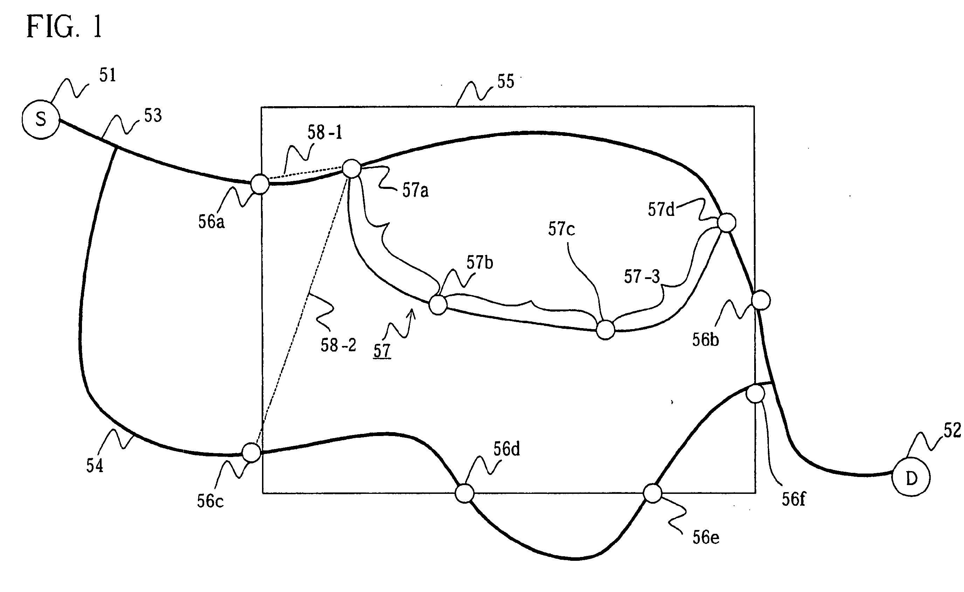

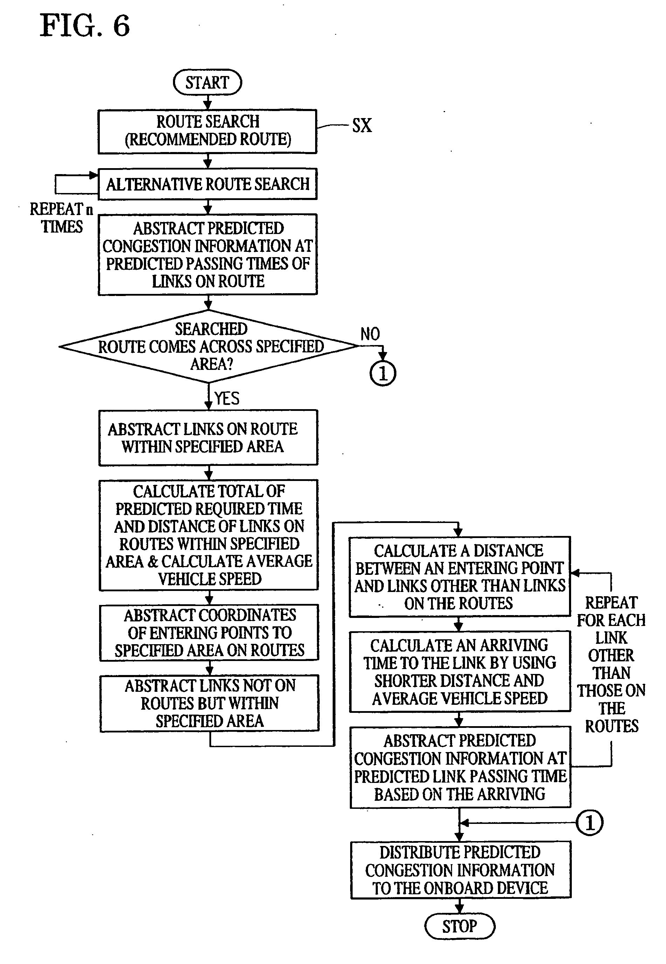

An exemplary navigation method will be described below with reference to Figs. 1 and 5. For ease of explanation, an example will be described in which a route to a destination includes an urban expressway. Note that an urban expressway means different roads in different areas, for example, the Metropolitan Expressway, the Hanshin Expressway, the Nagoya Expressway, and/or the Fukuoka Kitakyusyu Urban Expressway. The exemplary method assumes that the urban expressway is the Metropolitan Expressway. The exemplary method may be executed, for example, by the navigation system described above. However, it should be appreciated that the exemplary method need not be limited by the above-described structure. Fig. 1 shows an exemplary method of calculating a predicted passing time. Fig. 6 shows an exemplary information distribution method.

First, a destination is set. The destination may be set, for example, by a user operating an input unit of the onboard device 31. A search condition, for example, for determining a route by preferentially selecting a highway, may be set as well. Subsequently, a distribution of navigation data is requested. For example, the user may operate an input unit of the onboard device 31 to send a request for distributing DRG data to the information distribution server 11. After the onboard device 31 receives the request for distributing DRG data, the onboard device 31 may transfer, for example, a current position, a destination, and/or a search condition, to the information distribution server 11.

Next, a suitable route is searched (step S1). For example, after receiving the current position, the destination, and/or the search condition, the information distribution server 11 may start searching for a recommended route from the current position to the destination, for example, based on the received current position, the destination, and/or the search condition.

Then, one or more alternate routes for the recommended route is searched (Step S2). For example, the information distribution server 11 may search for an alternate route for the recommended route. If "n" number of alternate routes exist, the information distribution server 11 may repeat searching for an alternate route n times. Note that n is whole number. Furthermore, the upper limit of n may be set. Therefore, it is possible to limit the number alternate routes.

Predicted congestion information is generated at predicted passing times for each link on each route (step S3). In this case, for example, the information distribution server 11 may search for a plurality of routes, may calculate predicted passing times at links on the routes based on a predicted link travel time pattern, may generate predicted traffic information at the calculated predicted passing times, and may distribute DRG distribution data to the onboard device 31.

As discussed above, the information distribution server 11 may search for any number of routes. However, for ease of explanation, the exemplary method as shown in Fig. 1 assumes that two routes 53 and 54, are found when searching for a route from a starting point 51 to a destination 52 on the search condition that expressways are preferentially selected. Route 53 is a recommended route (e.g., determined in step S1) and alternate route 54 is an alternate route (e.g., determined in step S2).

Traffic congestion on the recommended route 53 and alternate route 54 is estimated based on a created, predicted link travel time pattern as described above. Then according to an area, in which traffic might get heavy, predicted congestion information is generated. A standard time of the predicted congestion information is set at a time at which the vehicle is expected to pass through the area, that is, a predicted vehicle passing time. The standard time may be adjusted depending on the predicted vehicle passing times on the recommended route 53 and alternate route 54. A predicted vehicle passing time on each link is a time at a starting point of each link, based on the travel direction of the vehicle.

It is then determined whether either of the recommended route 53 or alternate route 54 crosses the specified area 55 (step S4). For example, the information distribution server 11 may determine whether either of the recommended route 53or the alternate route 54 crosses the specified area 55 which is registered in, for example, the area definition portion 14. If neither of the routes passes through the area (step S4 = NO), data of the recommended route 53 and alternate route 54, and data including predicted congestion information for the routes 53, 54, are distributed (step S 12). For example, the data may be distributed from the information distribution server 11 to the onboard device 31. Thus, the onboard device 31 may search for a route to avoid congestion as the result of executing DRG with the received DRG data. Additionally, the accuracy of a predicted arriving time at the destination 52 may be improved.

If the recommended route 53 or the alternate route 54 passes through the specified area 55 (step S4 = YES) additional options may be considered in selecting a route. The specified area 55 may be a place where the user has additional options to select a route to avoid congestion, for example, because a network of roads therein is complex. Therefore, if traffic information for only the recommended route 53 and the alternate route 54 is received, a less optimal route may be searched with the received DRG data.

Specifically, if the recommended route 53 or the alternate route 54 passes through the specified area 55, the user may have broad options to select a route to avoid congestion because branch points and/or intersection points exist within the specified area 55. If the information distribution server 11 creates and distributes predicted congestion information about only the recommended route 53 and the alternate route 54, the onboard device 31 may determine that there is no congestion on the remaining available routes to the destination. Thus, the onboard device 31 may select a route for which the information distribution server 11 did not distribute predicted congestion information. However, routes for which the information distribution server 11 did not distribute predicted congestion information may still have traffic congestion. Accordingly, the route selected by the onboard device 31 may not be optimal.

Thus, according to the exemplary method, predicted traffic information is determined for substantially all of the links within the specified area 55. As used herein "substantially all of the links" is intended to include all links for which predicted traffic information is readily and/or timely available to the information sever 11. For example, in Fig. 1, a part of the recommended route 53 from a point 56a to a point 56b passes through the specified area 55. Parts of the alternate route 54 from a point 56c to a point 56d, and from a point 56e to a point 56f pass through the specified area 55. Therefore, predicted traffic information may be determined for three links, a link from the point 56a to the point 56b on the recommended route 53, a link from the point 56c to the point 56d on the alternate route 54, and a link from the point 56e and the point 56f on the alternate route 54. Note that, the section from the point 56a to the point 56b on the route 53, the section from the point 56c to the point 56d on the alternate route 54, and the section from the point 56e to the point 56f on the alternate route 54 may be made up of one link or more than one link.

Subsequently, a total of predicted required time and total distance concerning links on the recommended route 53 and the alternate route 54 in the specified area 55, and an average vehicle speed are calculated (Step S6). For example, in Fig.1, the distance between the point 56a and the point 56b on the recommended route 53, the distance between the point 56c and the point 56d on the alternate route 54, and the distance between the point 56e and the point 56f on the alternate route 54 are added and the total distance is set as a total link distance in the specified area 55.

Further, the required time to travel from the point 56a to the point 56b on the recommended route 53, the required time to travel from the point 56c to the point 56d on the alternate route 54, and the required time to travel from the point 56e to the point 56f on the alternate route 54 are summed up and the total time is set as a total required time for links in the specified area 55.

The required time to travel from the point 56a to the point 56b on the recommended route 53, the required time to travel from the point 56c to the point 56d on the alternate route 54, and the required time to travel from the point 56e to the point 56f on the alternate route 54 are calculated based on a predicted link travel time pattern. Specifically, the information distribution server 11 may obtain predicted vehicle passing times at links on the recommended route 53 and 54, thereby predicted link travel times corresponding to the predicted passing times are the required time to travel links. Thus, the information distribution server 11 may obtain the required time to travel links. Accordingly, the required time to travel from the point 56a to the point 56b on the recommended route 53, the required time to travel from the point 56c to the point 56d on the alternate route 54, and the required time to travel from the point 56e to the point 56f on the alternate route 54 are calculated and the total required time for links in the specified area 55 is calculated.

The information distribution server 11 may obtain an average vehicle speed in the specified area 55 by dividing the total link distance in the specified area 55 by the total required time to travel the link in the specified area 55.

Next, coordinates of the entering points on the recommended route 53 and the alternate route 54 to the specified area 55 are determined (Step S7). Entering points are positions where the recommended route 53 and the alternate route 54 respectively cross the borderline of the specified area 55. When looking at the points through the viewpoint of a running vehicle, a nearer intersection from the starting point is the entering point. According to the example in Fig. 1, point 56a and point 56c are the entering points. Accordingly, points 56a and 56c are determined to be entering points based on link data included in map data.

Next, traffic congestion is predicted for links in the specified area 55 that are not on the recommended route 53 nor the alternate route 54 (Step S8). That is, traffic congestion is predicted for substantially all links in the specified area 55 other than links on the recommended route 53 and the alternate route 54. For example, in Fig. 1, the links on the road 57 are not on the recommended route 53 and the alternate route 54. On the road 57, a link 57-1 from a point 57a to a point 57b, a link 57-2 from a point 57b to a point 57c, and a link 57-3 from a point 57c to a point 57d exist. The end point 57a is a branch point of the recommended route 53 and the road 57. The end point 57d is a branch point of the recommended route 53 and the road 57. Note that a plurality of links may exist other than links on the recommended route 53 and the alternate route 54 in the specified area 55. However, this exemplary method assumes that only three links of the road 57 exist in the area.

Subsequently, distances between the entering point and links that are not on either of the recommended route 53 or the alternate route 54 are calculated (step S9). In the example of Fig. 1, linear distances between the points 56a and 56c and starting points of links on the road 57 are calculated. Thus, when calculating the distance to the link 57-1, a linear distance between the link 57-1 and the point 56a is calculated. In this example, the linear distance between the point 56a and the point 57a is equal to the length of the line 58-1 connecting the 56a and 57a. The linear distance between the point 56c and the point 57a is equal to the length of the line 58-2 connecting the 56c and 57a.

Then, an arrival time is calculated using the shorter distance from the respective entry points of the recommended route 53 and the alternate route 54 and the and starting points of the links other than links on the route (Step S10). For example, the information distribution server 11 may calculate an arriving time to the link 57-1 by using the shorter of lines 58-1 and 58-2 and the average vehicle speed. In this case, the distance between the point 56a and a link on the road 57 (line 58-1) is shorter than the distance between the point 56c and a link on the road 57 (line 58-2). Thus, an arriving time at the link 57-1 is found by dividing the length of the line 58-1 by the calculated average vehicle speed in the specified area 55.

Congestion information is predicted for the calculated link passing time (step S11). For example, the information distribution server 11 may predict congestion information at the predicted passing time for link 57-1. As described above, predicted vehicle passing times at links on the recommended route 53 and the alternate route 54 have been obtained. That is, the predicted passing time at the point 56a as an entering point has been obtained. Thus, in order to determine the predicted passing time at the link 57-1, the time required to travel from point 56a to point 57a is added to the predicted passing time at the point 56a. The predicted passing time is set as a standard time. Based on the predicted link travel time pattern and the predicted passing time, the congestion information for the link 57-1 is predicted.

Note that, an entire operation from calculating a distance between an entering point and a link to predicting congestion information at the link may be repeated for all links other than the links included in the recommended route 53 and the alternate route 54. Thereby, congestion information for all links other than the links on the recommended route 53 and the alternate route 54 in the specified area 55 may be predicted. Because all predicted passing times for all links in the specified area 55 are calculated, predicted congestion information may be created based on the calculated predicted passing times. Therefore, even in the specified area 55 with a complex road network and a lot of branch points and/or intersection points, the user may reliably select a route other than the recommended route or alternate route 54. This is because, according to the above-described exemplary methods, it is possible to obtain various kinds of data including, for example, predicted congestion information for all links in the specified area 55 as DRG data and to use such data to search for a route.

Accordingly, after congestion information for the recommended route 53, the alternate route 54, and all links in the specified area 55 is predicted, the information is distributed (step S12). For example, the information distribution server 11 may distribute DRG data, including the predicted congestion information for the recommended route 53, the alternate route 54, and all links in the specified area 55, to the onboard device 31. The onboard device 31 may receive the predicted congestion information from the information distribution server 11, executes DRG, and reliably searches for a route to avoid traffic congestion.

As a result, the onboard device 31 searches for a route to avoid congestion as the result of executing DRG with the received DRG data. Additionally, the accuracy of a predicted arriving time at the destination 52 may be improved.

It should be appreciated that the exemplary navigation system may execute the same method even in case that a route to a destination does not include the Metropolitan Expressway. In this case, not only a second grid section of the Grid Square System, but an administrative area or a section of a map made by the Grid Square System may be used to specify a desired area in advance. Then, the area is registered as a specified area in, for example, the area definition portion 14.

Therefore, even when a vehicle enters within an area with complex road network and a lot of branch points and/or intersection points (for example, an area including an urban expressway) if the area is registered as the specified area 55 in advance, the onboard device 31 may use accurate predicted congestion information for all routes that could be passed through. Thereby, a suitable route to avoid congestion may be searched. Additionally, the accuracy of a predicted arriving time at a destination may be improved.

In the exemplary route search method described above, the specified area 55 registered in advance, however, the predetermined in which congestion information is predicted by calculating predicted passing times for all links may be any area, and need not be registered in advance.

While various features have been described in conjunction with the examples outlined above, various alternatives, modifications, variations, and/or improvements of those features and/or examples may be possible. Accordingly, the examples, as set forth above, are intended to be illustrative.

In the foregoing, a navigation system, traffic prediction method, and traffic prediction program search for a plurality of routes to a destination have been described. The system, method, and program calculate, if any of the plurality of routes passes through a predetermined area, a predicted time at which a link within the predetermined area will be passed through. The system, method, and program generate predicted traffic information for the link at the predicted time at which the link will be passed through based on the stored traffic information.

## Claims

1. A navigation system, comprising:
a memory (**12**) that stores traffic information; and
a controller (**21**) that is adapted
(a) to search for a plurality of routes to a destination; and
(b) to determine whether any of the plurality of routes pass through a predetermined area;
(c) to calculate, if any of the plurality of routes pass through a predetermined area (**55**), an average vehicle speed within the predetermined area;
(d) to calculate a distance between an entering point to the predetermined area (**55**), when travelling along one of the plurality of routes, and a link, the link not being on the plurality of routes but within the predetermined area;
(e) to calculate a predicted time at which said link within the predetermined area will be passed through based on the average vehicle speed and the distance; and
(f) to generate predicted traffic information for said link at the predicted time at which said link will be passed through based on the stored traffic information.

2. The navigation system of claim 1, wherein the controller is adapted
to generate a predicted link travel time pattern based on link travel time patterns stored in the memory (**12**); and
to generate the predicted traffic information based on the predicted link travel time pattern.

3. The navigation system of claim 1, wherein the controller is adapted to calculate, for each of the plurality of routes, the average vehicle speed based on the distance of that route that passes through the predetermined area (**55**) and a time which is needed to travel the total distance.

4. The navigation system of claim 1, further comprising:
a server (**11**), the server comprising the controller.

5. The navigation system of claim 4, further comprising:
an onboard device (**31**), the onboard device comprising a second memory that stores map data including search data;
wherein the server (**11**) is adapted to distribute the predicted traffic information to the onboard device, and the onboard device is adapted to search for a route to the destination by using the predicted traffic information.

6. A traffic information prediction method, comprising:
storing traffic information;
searching for a plurality of routes to a destination;
determining whether any of the plurality of routes pass through a predetermined area (**55**);
calculating, if any of the plurality of routes pass through a predetermined area (**55**), an average vehicle speed within the predetermined area;
calculating a distance between an entering point to the predetermined area (**55**) when travelling along one of the plurality of routes and a link, the link not being on the plurality of routes but within the predetermined area;
calculating a predicted time at which said link within the predetermined area will be passed through based on the average vehicle speed and the distance; and
generating predicted traffic information for the link at the predicted time at which said link will be passed through based on the stored traffic information.

7. The traffic information prediction method of claim 6, wherein generating the predicted traffic information for the link at the predicted time at which said link will be passed through comprises:
generating a predicted link travel time pattern based on link travel time patterns stored in the memory; and
generating the predicted traffic information based on the predicted link travel time pattern.

8. A storage medium storing a set of program instructions executable on a data processing device and usable to predict traffic information, the instructions comprising:
instructions for storing traffic information;
instructions for searching for a plurality of routes to a destination;
instructions for determining whether any of the plurality of routes pass through a predetermined area (**55**);
instructions for calculating, if any of the plurality of routes pass through a predetermined area, an average vehicle speed within the predetermined area;
instructions for calculating a distance between an entering point to the predetermined area (**55**) when travelling along one of the plurality of routes and a link, said link not being on the plurality of routes but within the predetermined area;
instruction for calculating a predicted time at which said link within the predetermined area will be passed through based on the average vehicle speed and the distance; and
instructions for generating predicted traffic information for said link at the predicted time at which said link will be passed through based on the stored traffic information.

## Patentansprüche

1. Navigationssystem, mit:
einem Speicher (12), der Verkehrsinformationen speichert; und
einer Steuerung (21), die eingerichtet ist, um
(a) nach einer Vielzahl von Routen zu einem Ziel zu suchen; und
(b) zu bestimmen, ob irgendeine der Vielzahl von Routen durch einen vorbestimmten Bereich verläuft;
(c) eine durchschnittliche Fahrzeuggeschwindigkeit innerhalb eines vorbestimmten Bereiches (55) zu berechnen, wenn irgendeine der Vielzahl von Routen durch den vorbestimmten Bereich (55) verläuft;
(d) eine Distanz zwischen einem Eintrittspunkt in den vorbestimmten Bereich (55) und einer Verbindung zu berechnen, wenn entlang einer der Vielzahl von Routen entlanggefahren wird, wobei die Verbindung nicht auf der Vielzahl von Routen liegt, aber innerhalb des vorbestimmten Bereiches;
(e) eine prognostizierte Zeit zu berechnen, bei der die Verbindung innerhalb des vorbestimmten Bereiches durchlaufen werden wird, basierend auf der durchschnittlichen Fahrzeuggeschwindigkeit und der Distanz; und
(f) prognostizierte Verkehrsinformationen für die Verbindung bei der prognostizierten Zeit zu erzeugen, bei der die Verbindung durchlaufen werden wird, basierend auf den gespeicherten Verkehrsinformationen.

2. Navigationssystem gemäß Anspruch 1, wobei die Steuerung eingerichtet ist, um
ein prognostiziertes Verbindungsreisezeitmuster basierend auf in dem Speicher (12) gespeicherten Verbindungsreisezeitmustern zu erzeugen; und
die prognostizierten Verkehrsinformationen basierend auf dem prognostizierten Verbindungsreisezeitmuster zu erzeugen.

3. Navigationssystem gemäß Anspruch 1, wobei die Steuerung eingerichtet ist, für jede der Vielzahl von Routen die durchschnittliche Fahrzeuggeschwindigkeit basierend auf der Distanz jener Route, die durch den vorbestimmten Bereich (55) verläuft, und einer Zeit, die benötigt wird, um die Gesamtdistanz zu bewältigen, zu berechnen.

4. Navigationssystem gemäß Anspruch 1, weiterhin mit:
einem Server (11), wobei der Server die Steuerung umfasst.

5. Navigationssystem gemäß Anspruch 4, weiterhin mit:
einer fahrzeuginternen Einrichtung (31), wobei die fahrzeuginterne Einrichtung einen zweiten Speicher aufweist, der Kartendaten mit Suchdaten speichert;
wobei der Server (11) eingerichtet ist, die prognostizierten Verkehrsinformationen an die fahrzeuginterne Einrichtung zuzuteilen, und die fahrzeuginterne Einrichtung eingerichtet ist, um durch Verwenden der prognostizierten Verkehrsinformationen nach einer Route zu dem Ziel zu suchen.

6. Verkehrsinformationsprognostizierverfahren, mit den Schritten:
Speichern von Verkehrsinformationen;
Suchen nach einer Vielzahl von Routen zu einem Ziel;
Bestimmen, ob irgendeine der Vielzahl von Routen durch einen vorbestimmten Bereich (55) verläuft;
Berechnen einer durchschnittlichen Fahrzeuggeschwindigkeit innerhalb eines vorbestimmten Bereiches (55), wenn irgendeine der Vielzahl von Routen durch den vorbestimmten Bereich verläuft;
Berechnen einer Distanz zwischen einem Eintrittspunkt in den vorbestimmten Bereich (55) und einer Verbindung, wenn entlang einer der Vielzahl von Routen gefahren wird, wobei die Verbindung nicht auf einer der Vielzahl von Routen liegt, aber innerhalb des vorbestimmten Bereiches;
Berechnen einer prognostizierten Zeit, bei der die Verbindung innerhalb des vorbestimmten Bereiches durchlaufen werden wird, basierend auf der durchschnittlichen Fahrzeuggeschwindigkeit und der Distanz; und
Erzeugen von prognostizierten Verkehrsinformationen für die Verbindung zur prognostizierten Zeit, bei der die Verbindung durchlaufen werden wird, basierend auf den gespeicherten Verkehrsinformationen.

7. Verkehrsinformationsprognostizierverfahren gemäß Anspruch 6, wobei das Erzeugen der prognostizierten Verkehrsinformationen für die Verbindung bei der prognostizierten Zeit, bei der die Verbindung durchlaufen werden wird, die Schritte aufweist:
Erzeugen eines prognostizierten Verbindungsreisezeitmusters basierend auf in dem Speicher gespeicherten Verbindungsreisezeitmustern; und
Erzeugen der prognostizierten Verkehrsinformationen, basierend auf dem prognostizierten Verbindungsreisezeitmuster.

8. Speichermedium, das einen Satz von auf einer Datenverarbeitungseinrichtung ausführbaren Programmbefehlen speichert, und verwendbar ist, Verkehrsinformationen zu prognostizieren, wobei die Befehle umfassen:
Befehle zum Speichern von Verkehrsinformationen;
Befehle zum Suchen nach einer Vielzahl von Routen zu einem Ziel;
Befehle zum Bestimmen, ob irgendeine der Vielzahl von Routen einen vorbestimmten Bereich (55) durchläuft;
Befehle zum Berechnen einer durchschnittlichen Fahrzeuggeschwindigkeit innerhalb eines vorbestimmten Bereiches, wenn irgendeine der Vielzahl von Routen den vorbestimmten Bereich durchläuft;
Befehle zum Berechnen einer Distanz zwischen einem Eintrittspunkt in den vorbestimmten Bereich (55) und einer Verbindung, wenn entlang einer der Vielzahl von Routen gereist wird, wobei die Verbindung nicht auf der Vielzahl von Routen liegt, aber innerhalb des vorbestimmten Bereiches;
Befehle zum Berechnen einer prognostizierten Zeit, bei der die Verbindung innerhalb des vorbestimmten Bereiches durchlaufen werden wird, basierend auf der durchschnittlichen Fahrzeuggeschwindigkeit und der Distanz; und
Befehle zum Erzeugen von prognostizierten Verkehrsinformationen für die Verbindung zur prognostizierten Zeit, bei der die Verbindung durchlaufen werden wird, basierend auf den gespeicherten Verkehrsinformationen.

## Revendications

1. Système de navigation, comprenant:
une mémoire (12) qui stocke une information de circulation routière; et
une unité de commande (21) qui est adaptée
(a) pour rechercher une pluralité de routes menant à une destination; et
(b) pour déterminer si l'une quelconque de la pluralité de routes passe à travers une zone prédéterminée;
(c) pour calculer, si l'une quelconque de la pluralité de routes passe à travers une zone prédéterminée (55), une vitesse moyenne du véhicule dans la zone prédéterminée;
(d) pour calculer une distance entre un point d'entrée à la zone prédéterminée (55), en se déplaçant le long de l'une de la pluralité de routes, et une liaison, la liaison n'étant pas sur la pluralité de routes mais dans la zone prédéterminée;
(e) pour calculer un temps prédit auquel l'on traversera ladite liaison dans la zone prédéterminée sur la base de la vitesse moyenne du véhicule et de la distance; et
(f) pour générer une information de circulation routière prédite pour ladite liaison au temps prédit auquel l'on traversera ladite liaison sur la base de l'information de circulation routière stockée.

2. Système de navigation de la revendication 1, dans lequel l'unité de commande est adaptée
pour générer un modèle de temps de déplacement à travers une liaison prédit sur la base de modèles de temps de déplacement à travers une liaison stockés dans la mémoire (12); et
pour générer l'information de circulation routière prédite sur la base du modèle de temps de déplacement à travers une liaison prédit.

3. Système de navigation de la revendication 1, dans lequel l'unité de commande est adaptée pour calculer, pour chacune de la pluralité de routes, la vitesse moyenne du véhicule sur la base de la distance de la route qui passe à travers la zone prédéterminée (55) et d'un temps nécessaire pour parcourir la distance totale.

4. Système de navigation de la revendication 1, comprenant en plus:
un serveur (11), le serveur comprenant l'unité de commande.

5. Système de navigation de la revendication 4, comprenant en plus:
un dispositif embarqué (31), le dispositif embarqué comprenant une deuxième mémoire qui stocke des données cartographiques incluant des données de recherche;
où le serveur (11) est adapté pour distribuer l'information de circulation routière prédite au dispositif embarqué, et le dispositif embarqué est adapté pour rechercher une route menant à la destination en utilisant l'information de circulation routière prédite.

6. Procédé de prédiction d'une information de circulation routière, comprenant:
stocker une information de circulation routière;
rechercher une pluralité de routes menant à une destination;
déterminer si l'une quelconque de la pluralité de routes passe à travers une zone prédéterminée (55);
calculer, si l'une quelconque de la pluralité de routes passe à travers une zone prédéterminée (55), une vitesse moyenne du véhicule dans la zone prédéterminée;
calculer une distance entre un point d'entrée à la zone prédéterminée (55) en se déplaçant le long de l'une de la pluralité de routes et une liaison, la liaison n'étant pas sur la pluralité de routes mais dans la zone prédéterminée;
calculer un temps prédit auquel l'on passera à travers ladite liaison dans la zone prédéterminée sur la base de la vitesse moyenne du véhicule et de la distance; et
générer une information de circulation routière prédite pour la liaison au temps prédit auquel l'on passera à travers ladite liaison sur la base de l'information de circulation routière stockée.

7. Procédé de prédiction d'une information de circulation routière de la revendication 6, dans lequel le fait de générer l'information de circulation routière prédite pour la liaison au temps prédit auquel l'on passera à travers ladite liaison comprend:
générer un modèle de temps de déplacement à travers une liaison prédit sur la base de modèles de temps de déplacement à travers une liaison stockés dans la mémoire; et
générer l'information de circulation routière prédite sur la base du modèle de temps de déplacement à travers une liaison prédit.

8. Support de stockage stockant un ensemble d'instructions de programme exécutables sur un dispositif de traitement de données et utilisables pour prédire une information de circulation routière, les instructions comprenant:
des instructions pour stocker une information de circulation routière;
des instructions pour rechercher une pluralité de routes menant à une destination;
des instructions pour déterminer si l'une quelconque de la pluralité de routes passe à travers une zone prédéterminée (55);
des instructions pour calculer, si l'une quelconque de la pluralité de routes passe à travers une zone prédéterminée, une vitesse moyenne du véhicule dans la zone prédéterminée;
des instructions pour calculer une distance entre un point d'entrée à la zone prédéterminée (55) lorsque l'on se déplace le long de l'une de la pluralité de routes et une liaison, ladite liaison n'étant pas sur la pluralité de routes mais dans la zone prédéterminée;
une instruction pour calculer un temps prédit auquel l'on passera à travers ladite liaison dans la zone prédéterminée sur la base de la vitesse moyenne du véhicule et de la distance; et
des instructions pour générer une information de circulation routière prédite pour ladite liaison au temps prédit auquel l'on passera à travers ladite liaison sur la base de l'information routière stockée.
